# EUROPEAN PATENT APPLICATION

(11) **EP 2 653 049 A2**
(43) Date of publication of application: **23.10.2013**
(21) Application number: 11848258.7
(22) Date of filing: 15.12.2011
(51) Int. Cl.: A43B 21/26, A43B 21/06, B29C 45/14, B29C 45/16

(54) **AUXILIARY SHOE HEEL AND METHOD OF FABRICATING SAME**

(30) Priority: 17.12.2010 KR 20100130052
(71) Applicant: Jang, Kun Chai, Goyang-si, Gyeonggi-do 410-821 (KR)
(72) Inventor: Jang, Kun Chai, Goyang-si, Gyeonggi-do 410-821 (KR)
(74) Representative: McCartney, Jonathan William
(86) International application number: PCT/KR2011/009650
(87) International publication number: WO 2012/081912

(57) **Abstract**

Disclosed is an auxiliary shoe heel and a method of fabricating the same. The auxiliary shoe heel includes a hard heel part and a soft heel. The hard heel part includes a coupling member that includes a coupling end integrally formed with an end of a coupling rod. The hard heel part further includes a hard heel which surrounds the coupling end of the coupling member, and is formed of hard rubber in a semicircular plate shape through an insert injection molding process. The hard heel has a plurality of soft heel holes vertically passing therethrough. The soft heel is integrally formed with the hard heel through an insert injection molding process so as to fill the soft heel holes and surround side and bottom surfaces of the hard heel. The soft heel is not easily separated from the hard heel, and provides cushioning and anti-slip functions.

## Description

### [Technical Field]

The present invention relates to an auxiliary shoe heel including a hard heel disposed in the center and a soft heel which is disposed to surround the periphery of the hard heel and is integrally formed with the hard heel through an insert injection molding process so that the hard heel and the soft heel in the auxiliary shoe heel will not be separated from each other and the auxiliary shoe heel provides cushioning and anti-slipping functions, and a method of manufacturing the auxiliary shoe heel.

### [Background Art]

Generally, typical shoes are footwear made of leather or other materials to protect wearer's feet. Shoes are produced in various sizes, designs, and colors using leather, synthetic rubber, and the like. Recently, with an increasing interest in reducing fatigue in feet, multifunctional shoes have been produced.

In such shoes, repeatedly folded portions of the upper, which is generally made of leather, and the outsole, made of synthetic rubber, rupture or become worn out. In the outsole, a heel portion is especially worn out faster than a forefoot portion. Accordingly, many wearers replace their shoe heels periodically.

When replacing the shoe heel, generally, a worn-out auxiliary shoe heel is removed from the main body of the shoe heel, the bottom surface of the main body of the shoe heel is ground to have a flat and smooth surface, an adhesive is applied to the entire flat surface of the main body of the shoe heel and the surface of a new auxiliary shoe heel, and the new auxiliary shoe heel is attached to the surface of the main body of the shoe heel. Finally, the auxiliary shoe heel is firmly fixed to the main body of the shoe heel using nails as necessary.

The replaced new auxiliary shoe heel is processed so as to fit the heel main body of the shoe heel. That is, the replaced auxiliary shoe heel is trimmed using a sharp tool and ground using a grinder.

Conventional auxiliary shoe heels are made of a single substance and are usually very rigid. The rigidity contributes to high wear resistance but has a disadvantage of a lack of cushioning, so shocks are directly transmitted to the wearer's feet and ankles and thus the wearer easily gets tired.

In order to solve this problem, the present inventor has developed an auxiliary shoe heel made from a hard heel which functions to increase the lift span of the auxiliary shoe heel by increasing durability and minimizing a wear rate of the auxiliary shoe heel attributable to the friction between the ground and the auxiliary shoe heel, and a soft heel which functions to provide cushioning so as to reduce fatigue in a wearer's feet.

The auxiliary shoe heel made from the hard heel and the soft heel is structured such that the soft heel protrudes from the hard heel to provide as much of a cushioning effect as possible. However, it has a problem that cracks occur in the interface between the hard heel and the soft heel due to pushing and pressing forces while the wearer is walking, and the soft heel may break or even become separated from the hard heel.

When the soft heel breaks, the wearer cannot stably walk wearing the shoes with the broken shoe heels. Because of this problem, the present inventor also has proposed another improved auxiliary shoe heel made from a soft heel and a hard heel, the soft heel of which does not break even if the soft heel is repeatedly compressed and expanded, or even if it comes into contact with and separates from the ground repeatedly, and which is structured such that the soft heel is more securely fixed to the hard heel, thereby enabling the wearer to stably walk and minimizing the wearer's foot fatigue by providing a cushioning effect. However, even this improved shoe heel has a problem in that bonding force between the hard heel and soft heel, which are combined through an insert injection molding process, is lost over time due to differences in material, rigidity, and strength.

For this reason, there is a strong demand for an auxiliary shoe heel which is produced through an insert injection molding process in such a manner that a soft heel surrounds the entire periphery of a hard heel and a bonding force between the soft heel and hard heel is increased so as not to be easily separated from each other, and for a method for manufacturing the auxiliary shoe heel.

### [Disclosure]

### [Technical Problem]

Accordingly, the present invention has been made keeping in mind the above problems occurring in the related art, and is intended to provide an auxiliary shoe heel and a method for manufacturing the auxiliary shoe heel in which a hard heel has a plurality of holes and a soft heel is manufactured through an insert injection molding process so as to fill the holes in the hard heel and to surround the periphery and bottom surface of the hard heel, thereby providing cushioning and anti-slip functions.

Another object of the invention is to provide an auxiliary shoe heel in which a hard heel has various forms of holes in the periphery surface in order to increase the area of a contact surface between the hard heel and a soft heel when the soft heel fills the holes of the hard heel, and a bonding force between the hard and soft heels, thereby preventing the hard and soft heels from being separated from each other.

A further object of the invention is to provide an auxiliary shoe heel which varies in contour depending on a shape and use of a main shoe heel.

### [Technical Solution]

In an aspect, the present invention provides an auxiliary shoe heel, including: a hard heel part including a coupling member and a hard heel coupled to each other, the coupling member including a coupling rod and a coupling end integrally formed with an end of the coupling rod, the hard heel being formed of hard rubber in a semi-circular plate shape through an insert injection molding process so as to surround the coupling end of the coupling member and having a plurality of soft heel holes that vertically passes through; and a soft heel that is coupled to the hard heel of the hard heel part through an insert injection molding process so as to fill the soft heel holes in the hard heel and surrounds side and bottom surfaces of the hard heel, wherein the auxiliary shoe heel is attached to a main shoe heel that is coupled to the bottom surface of a placement part of a shoe, on which a foot is placed, and that supports the foot, or coupled to the main shoe through the coupling member so as to function as an auxiliary shoe heel, so that the bottom surface of the soft heel surrounding the bottom surface of the hard heel comes into contact with the ground, providing cushioning and anti-slip functions.

### [Advantageous Effects]

As described above, the invention is intended to provide an auxiliary shoe heel and a method for manufacturing the auxiliary shoe heel that includes a hard heel with a plurality of holes and a soft heel which fills the holes in the hard heel and which surrounds the periphery and the bottom surface of the hard heel, coming into contact with the ground, as a liquid through an insert injection molding process, thereby providing cushioning and anti-slip functions.

The hard heel may have various shapes of holes in the side surface thereof to increase an area of a contact surface and a bonding force between the hard heel and the soft heel, thereby preventing the hard heel and the soft heel from being separated from each other.

The form of holes formed in the side surface of the hard heel varies depending on the shape and use of a shoe heel.

### [Description of Drawings]

FIG. 1 is an exploded perspective view of an auxiliary shoe heel according to one embodiment of the invention and a main shoe heel;
FIG. 2 is a cross-sectional view of the auxiliary shoe heel;
FIG. 3 is a perspective view illustrating a coupling member of a hard heel part;
FIG. 4 is a perspective view an auxiliary shoe heel, in which a soft support heel is formed, which is disposed upside down;
FIG. 5 is a cross-sectional view of FIG. 4;
FIG. 6 is a perspective view illustrating an auxiliary shoe heel, in which a right-shaped recess is formed, which is disposed upside down;
FIG. 7 is a cross-sectional view of FIG. 6;
FIG. 8 is a cross-sectional view illustrating the auxiliary shoe heel shown in FIG. 7 is mounted to a main shoe heel;
FIG. 9 is an operational cross-sectional view illustrating a state in which an auxiliary shoe heel is coupled to a main shoe heel and the auxiliary shoe heel is pressed by the weight of a wearer;
FIG. 10 is a perspective view illustrating a state in which a plurality of non-slips is formed on a surface of an auxiliary shoe heel;
FIGS. 11 to 13 are plan views illustrating the form of a to-be-filled groove formed in a hard heel;
FIGS. 14 and 15 are cross-sectional views illustrating various forms of to-be-filled grooves and hook portions formed in the side surface of a hard heel;
FIGS. 16 and 17 are a plan view and a cross-sectional view, respectively which illustrate a state in which a rib is formed in the side surface of a hard heel;
FIG. 18 is a cross-sectional view illustrating a state in which a soft heel fills soft heel holes to form a filling-and-expanding part;
FIG. 19 is a perspective view illustrating a state in which an insertion part is formed in a main shoe heel to allow an auxiliary shoe heel is coupled to the main shoe heel;
FIG. 20 is an exploded perspective view illustrating a state in which a protrusion is formed in a main shoe heel and a recess is formed in an auxiliary shoe heel;
FIG. 21 is a flowchart illustrating a method for manufacturing the auxiliary shoe heel according to the invention; and
FIG. 22 is a process flowchart illustrating a method for manufacturing the auxiliary shoe heel.

### <Reference Signs List>

- 10**:**: Placement part
- 20**:**: Main auxiliary heel
- 30**:**: Hard heel part
- 31**:**: Coupling rod
- 32**:**: Coupling end
- 32a**:**: Filling hole
- 33**:**: Coupling member
- 34**:**: Hard heel
- 34a**:**: Filling-and-expanding part
- 34b**:**: To-be-filled groove
- 34c**:**: Entrance
- 34d**:**: Groove hook portion
- 34e**:**: To-be-filled space
- 34f**:**: Hook portion
- 34g**:**: Insertion part
- 34h**:**: Insertion recess
- 34i**:**: Upper body part
- 34j**:**: Upper rib
- 34k**:**: Lower body part
- 341**:**: Lower rib
- 36**:**: Soft heel hole
- 40**:**: Soft heel
- 41**:**: Soft support heel
- 42**:**: Non-slip
- 43**:**: Ring-shaped recess
- 100**:**: Auxiliary shoe heel
- S1**:**: Coupling member manufacturing step
- S2**:**: Hard heel part manufacturing step
- S3**:**: Soft heel molding step

### [Best Mode]

The present invention provides an auxiliary shoe heel and a method for manufacturing the auxiliary shoe heel which includes a hard heel disposed in the center and a soft heel integrally formed with the hard heel through an insert injection molding process so as to surround the outer periphery surface of the hard heel so that the soft heel is not separated from the hard heel and the auxiliary shoe heel provides cushioning and anti-slip functions.

### [Mode for Invention]

Hereinbelow, preferred embodiments of the present invention will be described in detail with reference to the accompanying drawings.

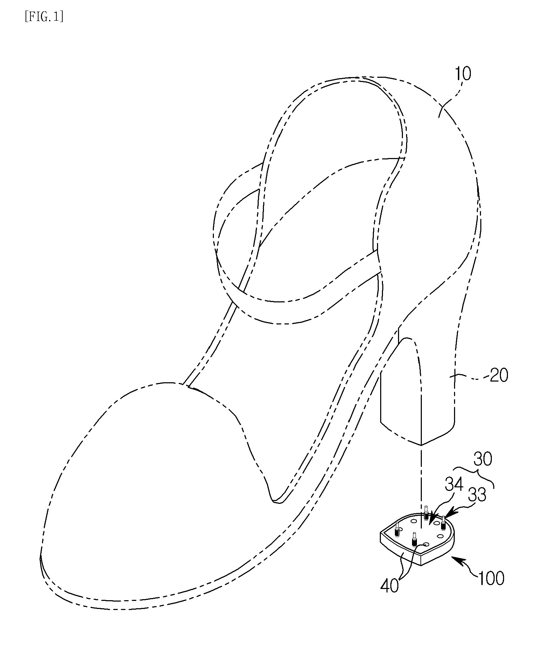

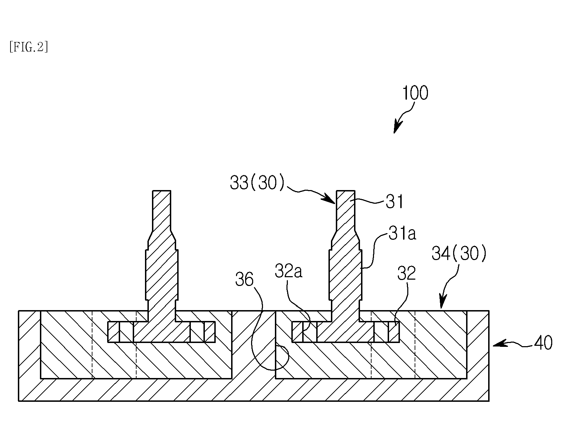

As illustrated in FIGS. 1 and 2, an auxiliary shoe heel according to the present invention is an auxiliary part of a shoe heel, attached or coupled to an end of a main shoe heel 20 which is coupled to the bottom surface of a placement part 10 of a shoe on which a foot is placed, and which supports a wearer's foot. An auxiliary shoe heel 100 according to the present invention includes a hard heel part 30 and a soft heel 40. The hard heel part 30 includes a hard heel 34, which is made of hard rubber and integrally formed with an end of the coupling member 33 through an insert injection molding process, and soft heel holes 36 formed in the hard heel 34. The soft heel 40 is integrally formed with the hard heel part 30 such that a material of the soft heel 40 is melted to fill the soft heel holes 36 and cover the side and bottom surfaces of the hard heel 34 through an insert injection molding process. The auxiliary shoe heel 100 is attached, or coupled to the main shoe heel 20 using the coupling member 33.

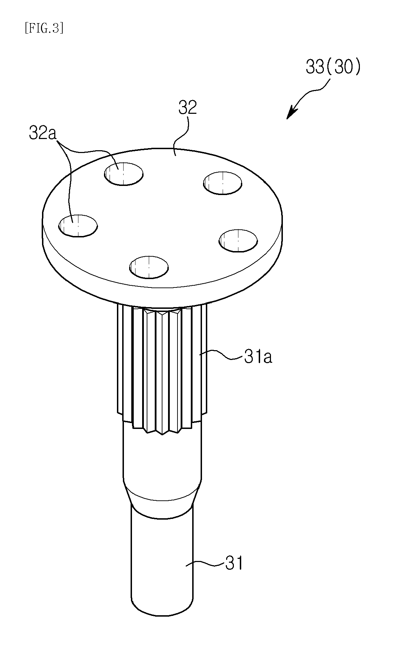

As illustrated in FIG. 3, the hard heel part 30 includes the coupling member 33 having a large-diameter coupling end 32 integrally formed with an end of a coupling rod 31.

The coupling member 33 of the hard heel part 30 is inserted into a hole in a lower end of the main shoe heel 20 so as to be coupled to the main shoe heel 20.

In this case, a plurality of filling holes 32a vertically passes through the coupling end 32 of the hard heel part 30.

The coupling end 32 may have a variety of forms. For example, it is in the form of a circular plate according to the present embodiment.

The filling holes 32a function to increase a coupling force by being filled with a material during the insert injection molding process of forming the hard heel 34.

As illustrated in FIGS. 1 and 2, the hard heel 34 is formed in a semi-circular plate shape through an insert injection molding process using hard rubber so as to surround the coupling end 32 of the coupling member 33. The hard heel 34 surrounding the coupling end 32 has a plurality of soft heel holes 36 which vertically passes through the body of the hard heel 34.

The shape of the hard heel 34 varies depending on the shape of the main shoe heel 20. That is, the hard heel 34 has the same shape as the main shoe heel 20. In the present embodiment, the hard heel 34 has a semi-circulate plate shape, for example.

When the hard heel 34 is coupled to the coupling end 32 in a manner of surrounding the coupling end 32 through an insert injection molding process, the plurality of soft heel holes 36, which vertically passes through the body of the hard heel 34, is formed. The soft heel holes 36 are arranged about the coupling end 32 in a variety of pattern.

The hard heel 34 of the hard heel part 30 is made of urethane- or fluorine-based synthetic resin or metal. The material of the hard heel 34 can be chosen from among a variety of materials, and the material of the hard heel 34 is determined in terms of minimizing a wear rate.

The soft heel 40 is made of urethane-based or fluorine-based synthetic resin, and is integrally formed with the hard heel 34 through an insert injection molding process so as to fill the soft heel holes 36 and surround the side and bottom surfaces of the hard heel 34 so that the bottom surface of the hard heel 34 will not come into contact with the ground.

That is, as the bottom surface of the soft heel 40 surrounding the bottom surface of the hard heel 34 comes into contact with the ground, cushioning and anti-slip functions are provided.

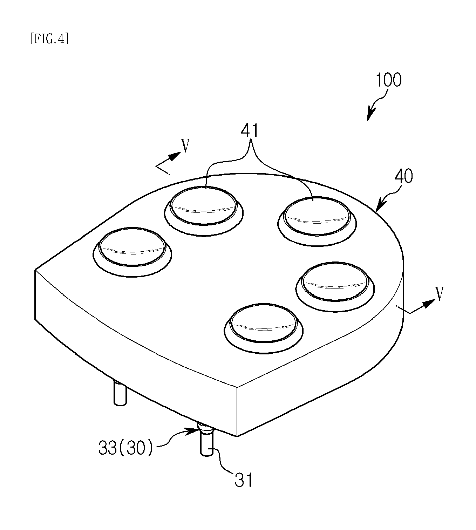

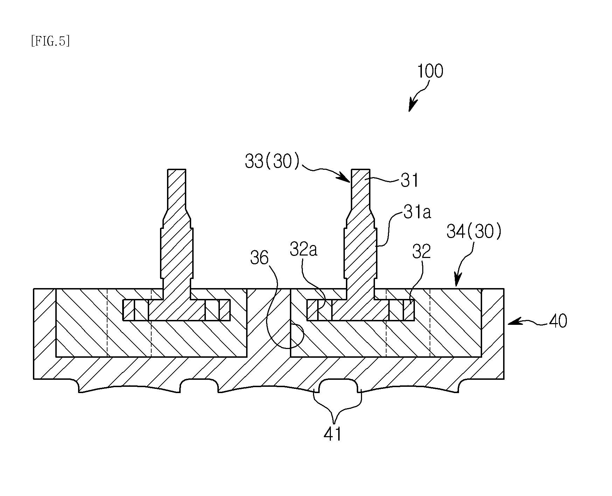

In FIGS. 4 and 5, another embodiment is illustrated. A soft support heel 41 protrudes from the bottom surface of a soft heel 40 so that the soft support heel 41 comes into contact with the ground first.

The soft support heel 41 is formed to protrude when the soft heel 40 is coupled to a hard heel 34 through an insert injection molding process.

As the soft support heel 41 comes into contact with the ground earlier than the soft heel 40, a cushioning function is provided by the soft support heel 41 and abrasion of the soft heel 40 is minimized.

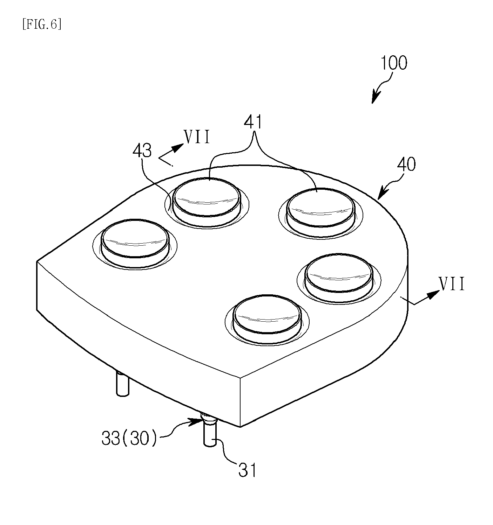

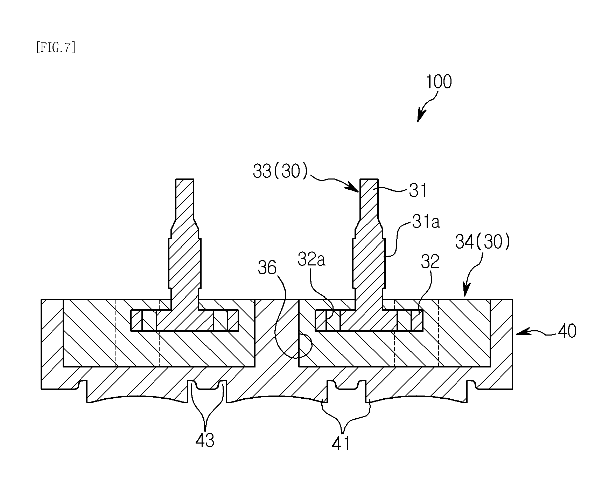

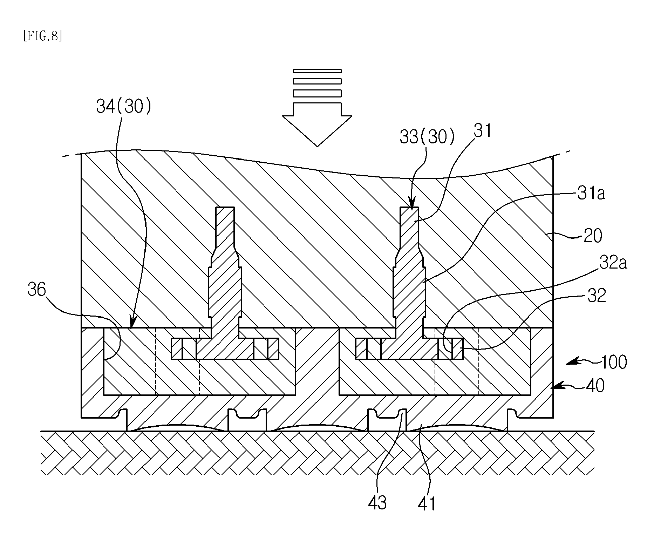

In FIGS. 6 through 9, a further embodiment is illustrated. A ring-shaped recess 43 is provided around the soft support heel 41 and in the soft heel 40. The ring-shaped recess 43 has a diameter larger than that of the soft support heel 41.

When the soft support heel 41 is pressed against the ground by the weight of the wearer, the soft support heel 41 may expand to be partially inserted into the ring-shaped recess 43 due to its elasticity.

Furthermore, the ring-shaped recess 43 has a larger area than a soft heel hole 36, and the cross-section shape of the ring-shaped recess 43 and the soft heel hole 36 may be any one of a triangle, a rectangle, a polygon, a circle, a star, and an oval, and any geometric shape.

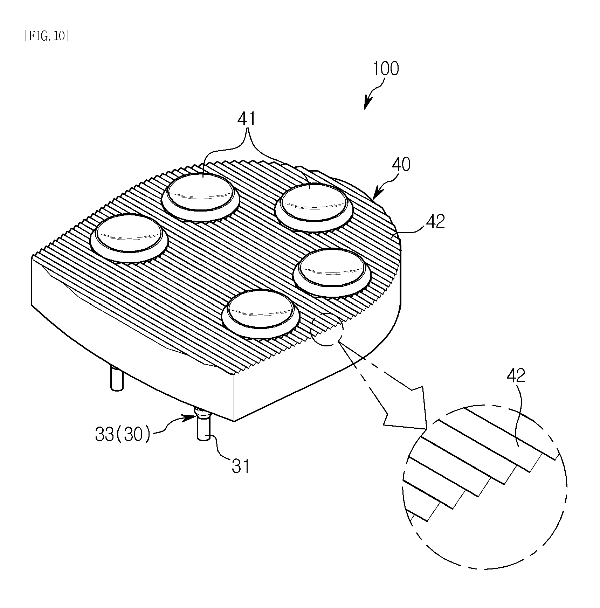

FIG. 10 illustrates a yet further embodiment. A plurality of non-slips 42, each extending in a width direction, is formed on the bottom surface of a soft heel 40 which comes into contact with the ground.

The non-slips 42 function to maximize anti-slip function and are formed on the bottom surface of the soft heel 40 which comes into contact with the ground except for the bottom surface of the soft support heel 41.

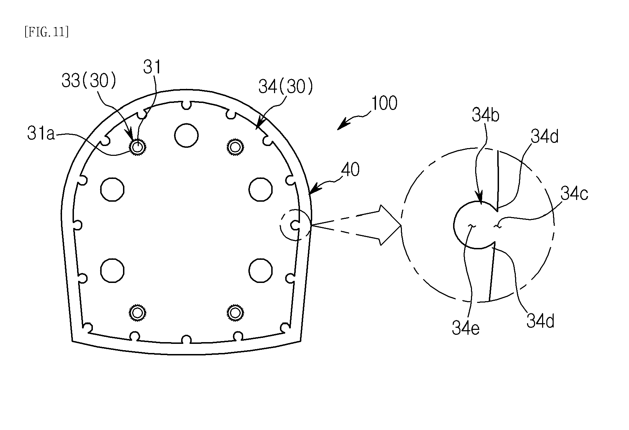

With reference to FIGS. 11 through 13, a plurality of to-be-filled grooves 34 is formed in the side surface of the hard heel 34 so that the to-be-filled grooves 34 are filled with the soft heel 34 while the insert injection molding process for forming the soft heel 34 is being performed.

As the to-be-filled grooves 34 are filled with the soft heel 40, a coupling force between the hard heel 34 and the soft heel 40 increases.

The to-be-filled grooves 34b are formed by partially cutting the outer surface of the hard heel 34 and groove hook portion 34 are provided at both ends of the to-be-filled groove 34b so as to face each other.

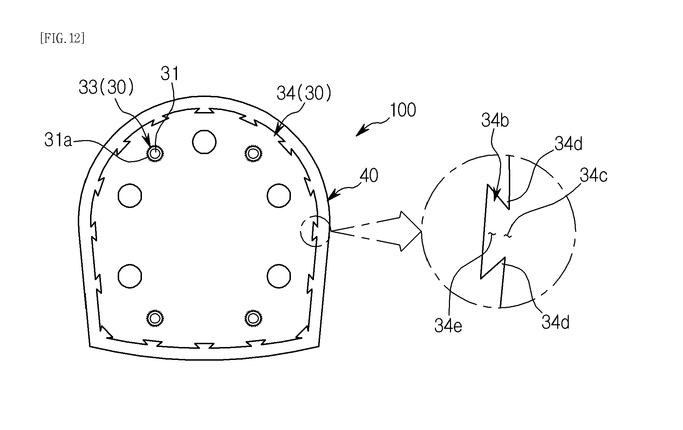

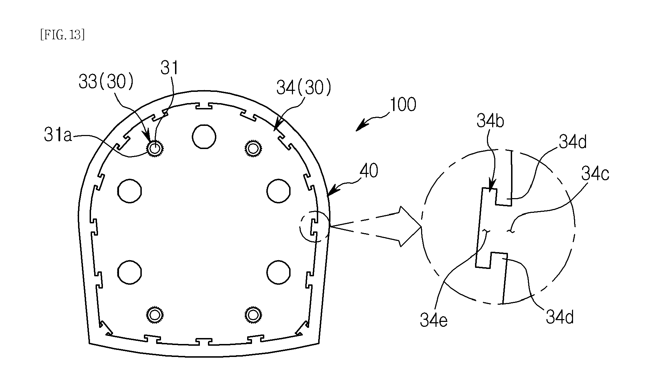

A to-be-filled recess 34e is formed between the groove hook portions 34d so as to be recessed from the to-be-filled groove, and has a circular cross-sectional shape (see FIG. 11), a triangular cross-sectional shape (see FIG. 12), or a rectangular cross-sectional shape (see FIG. 13). The to-be-filled recess 34e may vary in its shape depending on manufacturing conditions.

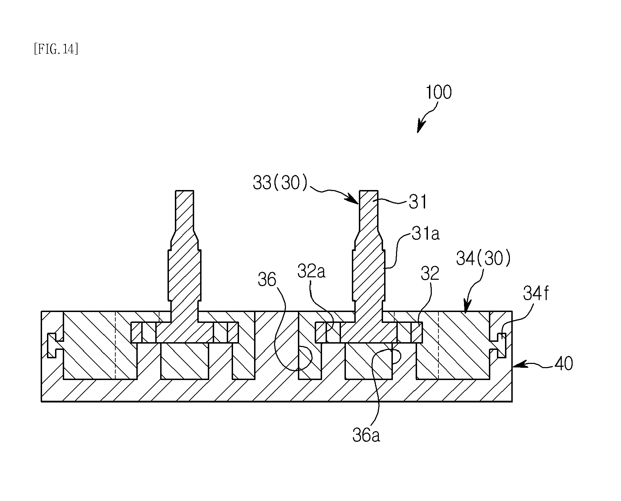

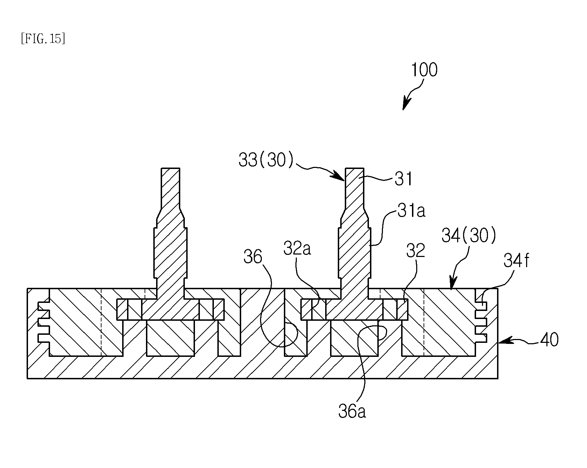

FIGS. 14 and 15 illustrate yet further embodiments. A hook portion 34f is formed to protrude outward from the side surface of a hard heel 34, or a soft heel recess 36a is formed in a hard heel 34 so as to be recessed from the surface of the hard heel 34. As for the soft heel recess 36a, a plurality of soft heel recesses 36 may be formed in the bottom surface of the hard heel 34.

The hook portion 34f has a 90°-rotated T shape, but not limitedly. The shape of the hook portion 34f may vary.

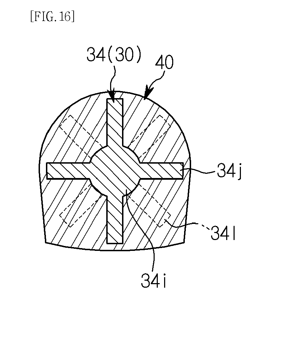

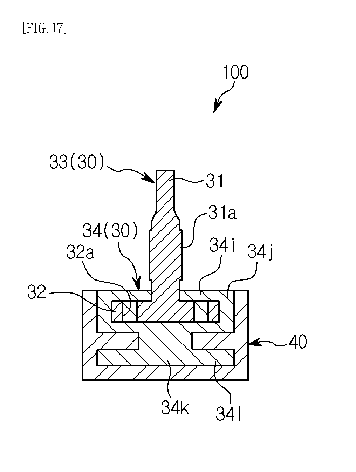

FIGS. 16 and 17 illustrate a yet further embodiment. A hard heel 34 may have a plurality of upper ribs 34j arranged along the outer periphery surface of an upper body 34i coupled to a coupling end 32 of a coupling member 33 through an insert injection molding process.

A plurality of lower ribs 341 are formed to be misaligned with the upper ribs 34j and arranged along the outer periphery surface of a lower body 34k which is integrally formed with the upper body 34i but distanced from the upper body 34i.

The soft heel 40 fills, is attached to, or is hooked by the hook portion 34f, the soft heel recess 36a, a gap between the upper and lower bodies 34i and 34k, and the upper and lower ribs 34j and 341, so that a coupling force is increased.

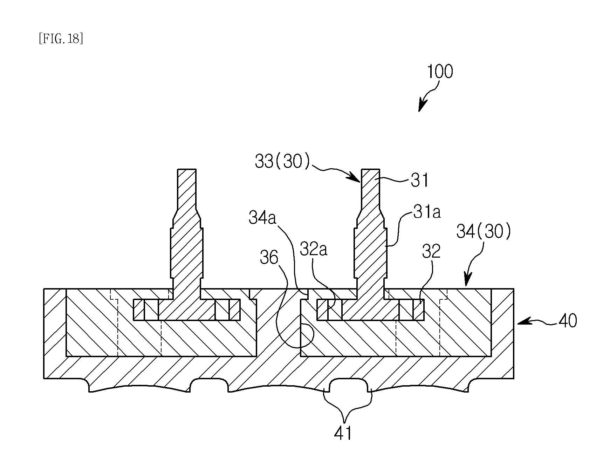

FIG. 18 illustrates yet further embodiment. As illustrated in FIG. 18, filling-and-expanding parts 34a are formed at upper ends of the soft heel hole 36 formed in the hard heel 34 so as to have a larger diameter than the soft heel hole 36 when the soft heel 40 is coupled to the hard heel through an insert injection molding process.

When the soft heel hole 36 and the filling-and-expanding part 34a are projected, their cross-sections have a letter "T" shape.

The soft heel 40 fills the soft heel holes 36 and is hooked by the filling-and-expanding parts 34a so that the soft heel 40 will not be easily separated from the hard heel 34.

The hard heel 34 having the structure described above may have the same shape as the main shoe heel 20, and, for example, may have a circular shape, an oval shape, a rectangular shape, or any one of other polygonal shapes.

The soft support heels 41 may be a cylinder shape and arranged at each vertex of a pentagonal shape, be a quadratic prism shape and arranged in two lines, be an oval shape and arranged at each vertex of a pentagonal shape, or be any geometric shape and arranged in four lines. That is, the soft support heels 41 may have a variety of shapes and arrangement.

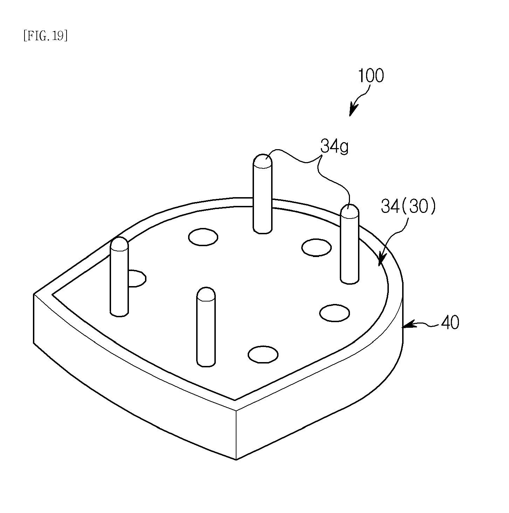

FIG. 19 illustrates yet further embodiment. As illustrated in FIG. 19, insertion parts 34g to be inserted in and coupled to a main shoe heel 20 may be formed on a top surface of a hard heel 34. The insertion parts 34g may be integrally formed with the hard heel 34.

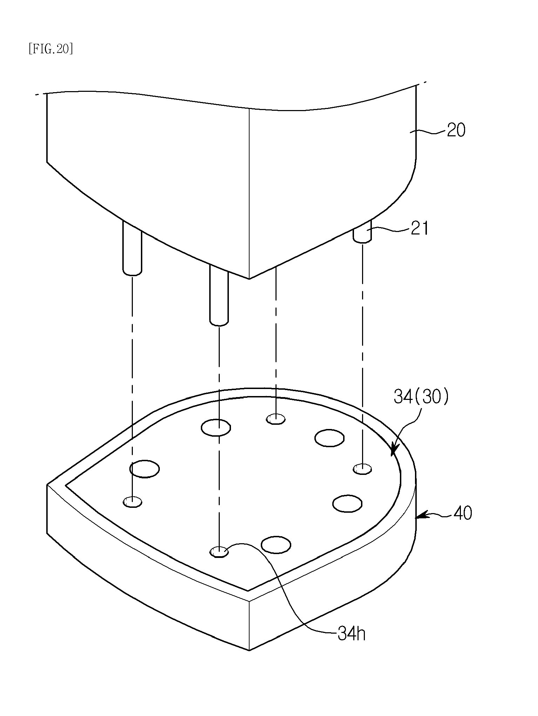

As illustrated in FIG. 20, protrusions 21 are formed on the bottom surface of a main shoe heel 20 and insertion recesses 34h are formed in the top surface of the hard heel 34.

In an auxiliary shoe heel according to the present embodiment, the protrusions 21 are inserted into the insertion recesses 34h so that the auxiliary shoe heel is coupled to the main shoe heel. The insertion parts 34g are integrally formed with the top surface of the hard heel 34.

A method for manufacturing an auxiliary shoe heel will be described below.

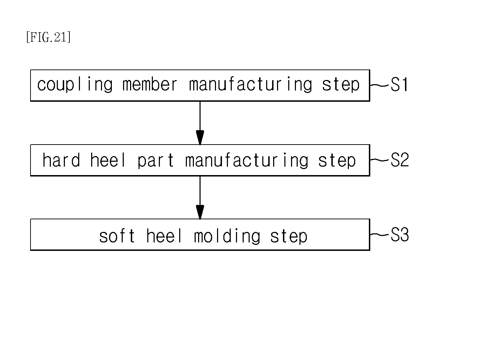

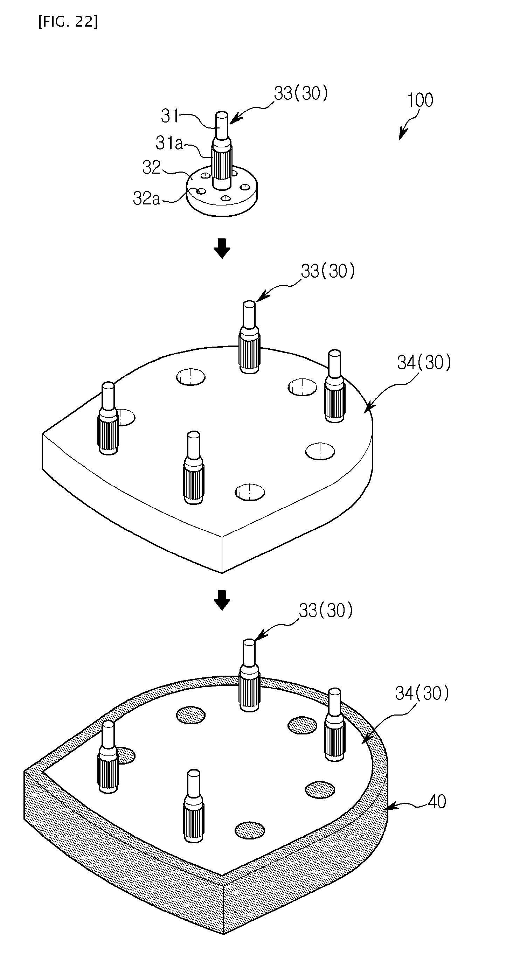

As illustrated in FIGS. 21 and 22, a method for manufacturing the auxiliary shoe heel 100 includes a coupling member manufacturing step S1, a hard heel part manufacturing step S2, and a soft heel molding step S3.

In the coupling member manufacturing step S1, a coupling rod 31 and a coupling end 32 of a coupling member 33 are formed, a stopping protrusion 31a is formed on a circumferential surface of the coupling rod 31, and a plurality of filling holes 32a is formed in the coupling end 32.

In the coupling member manufacturing step S1, the stopping protrusion 31a increases a coupling force of the coupling rod 31 after the coupling rod 31 is driven by a hammer so as to be inserted into a hole of the main shoe heel 20.

The hard heel part manufacturing step S2 is performed after the coupling member manufacturing step S1. In the hard heel part manufacturing step S2, a hard heel 34 is formed to surround the coupling end 32 of the coupling member 33 through an insert injection molding process, thereby being molded into a hard heel part.

In the hard heel part manufacturing step S2, when the hard heel 34 is made of synthetic resin, the resin is melted at a high temperature and then cured through an insert injection molding process so as to be integrated with the coupling end 32. When the hard heel 34 is made of metal, the hard heel 34 is integrated with the coupling member in a manner that a premolded hard heel 34 is assembled with the coupling end 32 in an inserting manner and then the coupling portion is pressed.

The hard heel 34 fills the filling holes 32a of the coupling end 32 through an insert injection molding process, thereby securing fixation between the hard heel 34 and the coupling member 33.

In the soft heel manufacturing step S3 subsequent to the hard heel part manufacturing step S2, a soft heel 40 comes to fill the soft heel holes 36 and cover the side surface and the bottom surface, facing the ground, of the hard heel 34 through an insert injection molding process. At this time, a plurality of soft support heels 41 is also formed. As a result, the auxiliary shoe heel 100 is completely manufactured.

A raw material of the soft heel 40 is melted so as to cover the outer surfaces of the hard heel 34 and molded into the hard heel of a desired shape through an insert injection molding process. That is, the molten soft heel 40 is coated on the side surface and the bottom surface of the hard heel 34 as well as the soft heel holes 36 of the hard heel 34 (see FIG. 2).

As the soft heel 40 is charged into the soft heel holes 36, the ring-shaped recess 43, the to-be-filled groove 34b, the hook portion 34f, and the soft heel recesses 36a, and then cured through the molding process, the coupling force between the soft heel 40 and the hard heel 34 is increased and it is possible to prevent the hard heel 34 and the soft heel 40 from being separated from each other due to a change in temperature or prolonged use, which is attributable to a difference in material, rigidity, and strength.

As illustrated in FIG. 15, the soft support heels 41 of the soft heel 40 protrude from the bottom surface of the soft heel 40 so as to come into contact with the ground before the hard heel 30 touches the ground. The soft support heels 41 are integrally formed with the soft heel 40. Because of the height difference between them, the soft support heels 41 come into contact with the ground first.

The auxiliary shoe heel 100 is hit by a hammer so that the coupling rod 31 of the coupling member 33 may be inserted into a hole of the bottom of the main shoe heel 20. In this way, the auxiliary shoe heel 100 is mounted to the bottom of the main shoe heel 20 and installation of the shoe heel to a shoe is completed.

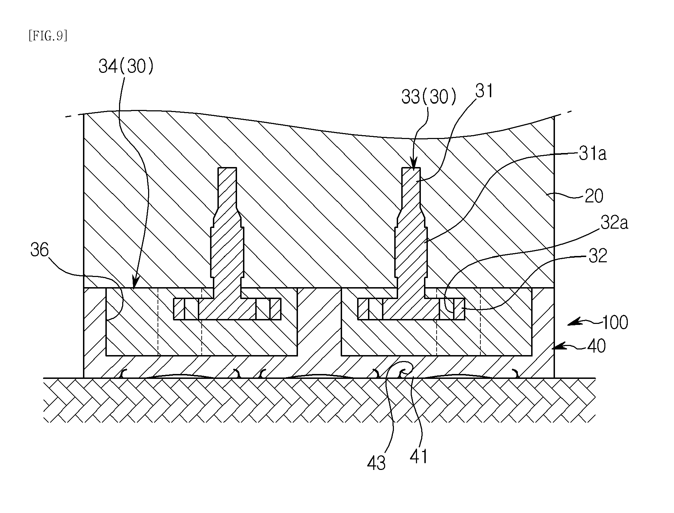

When a wearer walks while wearing the shoe to which the auxiliary shoe heel 100 is mounted, the soft support heel 41 of the soft heel 40 comes into contact with the ground first and is compressed due to the weight of the wearer, thereby having an advantage of providing a cushioning function (see FIG. 9).

In this case, when the soft support heel 41 is compressed and then expanded outward to have a convex contour, it expands toward the ring-shaped recess 43. Thus, breaking of the soft support heel 41, such as cracking or chapping, is prevented (see FIG. 9).

Furthermore, as the soft support heel 41 is integrally formed with the soft heel 40, the pressing force does not concentrate on the soft support heel 41 but disperses when the wearer walks while wearing the shoe, thereby preventing the breaking of the soft support heel 41 (see FIG. 9).

At this point, if the soft heel 40 entirely comes into contact with the ground, the non-slips 42 prevent slipping on the ground (see FIG. 10).

If the soft support heel 41 is completely compressed, the soft heel 40 disperses the load by coming into contact with the ground in a large area, thereby preventing fatigue fracture of the soft support heel 41. The load is transmitted in order of the soft support heel 41, the entire soft heel 40, the hard heel 34, the main shoe heel 20, and finally, the wearer's foot, thereby minimizing the shock to the wearer's foot.

Although the embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An auxiliary shoe heel that is attached or coupled, using a coupling member (33), to a main shoe heel (20) that is coupled to the bottom surface of a placement part (10) of a shoe, on which a wearer's food is to be placed, and that supports the wear's foot, thereby functioning as an auxiliary heel, the auxiliary shoe heel comprising:
a hard heel part (30) including:
a coupling member (33) having a coupling end (32) integrally formed with an end of a coupling rod (31); and
a hard heel (34) being formed of hard rubber in a semicircular plate shape through an insert injection molding process so as to surround the periphery of the coupling end (32) and having a plurality of soft heel holes 36 which vertically passes through; and
a soft heel (40) coupled to the hard heel (34) of the hard heel part (40) through an insert injection molding process,
wherein the soft heel (40) is integrally formed with the hard heel part (30) by filling the soft heel holes (36) and surrounding side and bottom surfaces of the hard heel (34) through an insert injection molding process, so that the soft heel (40), surrounding the bottom surface of the hard heel (34), provides cushioning and anti-slip functions when touching the ground.

2. The auxiliary shoe heel according to claim 1, wherein a soft support heel (41) of the soft heel (40) protrudes from the bottom surface of the soft heel (40) so that it comes into contact with the ground first, thereby providing a sense of cushioning by coming into contact with the ground earlier than the soft heel (40) and thus minimizing abrasion of the soft heel (40).

3. The auxiliary shoe heel according to claim 2, wherein a ring-shape recess (43) is formed to be recessed in a border between the soft heel (40) and the soft support heel (41) and has a diameter larger than that of the soft support heel (41), so that a periphery of the soft support heel (41) expands to enter into the ring-shaped recess (43) when the soft support (41) is pressed.

4. The auxiliary shoe heel according to claim 1 or 2, wherein a plurality of non-slips (42) extending in a width direction is formed on the bottom surface of the soft heel (40), which comes into contact with the ground, thereby maximizing an anti-slip effect.

5. The auxiliary shoe heel according to claim 1, wherein a plurality of to-be-filled grooves 34b is formed in the periphery of the hard heel (34) so as to be filled with the soft heel (40) when the soft heel (40) is coupled through an insert injection molding process, so that a coupling force between the hard heel (34) and the soft heel (40) is increased as the to-be-filled grooves 34b are filled with the soft heel (40).

6. The auxiliary shoe heel according to claim 5, wherein the to-be-filled grooves 34b are formed by cutting an outer surface of the hard heel (34), groove hook portions (34d) are formed at both sides of an opening (34c) so as to face each other, a to-be-filled space 34e having a circular sectional shape, a triangular sectional shape, or a rectangular sectional shape is formed to be recessed between the groove hook portions (34d).

7. The auxiliary shoe heel according to claim 1, wherein
a hook portion (34f), protruding outward, or a soft heel recess (36a) is formed in an end of the periphery of the hard heel (34), a plurality of soft heel recesses (36a) is formed in the bottom surface of the hard heel (34),
a plurality of upper ribs (34j) is formed in the hard heel (34) and arranged along an outer periphery of an upper body (34i) coupled to the coupling end (32) of the coupling member (33),
a plurality of lower ribs (341) is formed in the hard heel (34) and arranged along an outer periphery of a lower body (34k) integrally formed with but distanced from the upper body (34i) so as to be misaligned with the upper ribs (34j), and
the soft heel (40) fills, is hooked by, or attached to the hook portion (34f), the soft heel recesses (36a), a gap between the upper body (34i) and the lower body (34k), the upper ribs (34j), or the lower ribs (341), so that a coupling force is increased.

8. The auxiliary shoe heel according to claim 1 or 2, wherein
a filling-and-expanding part (34a) having a diameter larger than a diameter of the soft heel hole (36) is formed at an upper end of the soft heel holes (36) formed in the hard heel (34) when the soft heel holes (36) are filled with the soft heel (40) through an insert injection molding process, so that the soft heel (40) fills the soft heel holes (36) and the filling-and-expanding part (34a) and thus is latched by the filling-and-expanding part (34a), thereby not slipping off and falling down.

9. The auxiliary shoe heel according to claim 1, wherein insertion parts (34g) are integrally formed with the top surface of the hard heel (34) so as to be inserted in the main shoe heel (20).

10. The auxiliary shoe heel according to claim 1, wherein protrusions (21) are formed to protrude from the bottom surface of the main shoe heel (20) and insertion recesses (34h) are formed in the top surface of the hard heel (34) so that the protrusions (21) are inserted into and coupled to the insertion recesses (34h).

11. A method for manufacturing an auxiliary shoe heel that is attached or coupled, using a coupling member (33), to a main shoe heel (20) that is coupled to the bottom surface of a placement part (10) of a shoe, on which a wearer's foot is to be placed, and that supports the wear's foot, thereby functioning as an auxiliary heel, the auxiliary shoe heel comprising:
a hard heel part (30) including:
a coupling member (33) having a coupling end (32) integrally formed with an end of a coupling rod (31); and
a hard heel (34) being formed of hard rubber in a semicircular plate shape through an insert injection molding process so as to surround the periphery of the coupling end (32) and having a plurality of soft heel holes 36 which vertically passes through; and
a soft heel (40) coupled to the hard heel (34) of the hard heel part (40) through an insert injection molding process,
wherein the soft heel hole (36) is formed to vertically pass through the hard heel (34), and the soft heel (40) not only fills the soft heel hole (36) but also surrounds side and bottom surfaces of the hard heel (34) through an insert injection molding process so as to be integrally formed with the hard heel (34), so that the soft heel (40), surrounding the bottom surface of the hard heel (34), provides cushioning and anti-slip functions when touching the ground.

12. The method for manufacturing the auxiliary shoe heel according to claim 11, wherein a soft support heel (41) of the soft heel (40) is formed to protrude from the bottom surface of the soft heel (40) so as to come in contact with the ground first before the soft heel (40) touches the ground, thereby providing a cushioning function and minimizing abrasion of the soft heel (40).

13. The method for manufacturing the auxiliary shoe heel according to claim 11 or 12, wherein a plurality of non-slips (42) extending in a width direction is formed on the bottom surface of the soft heel (40) which comes into contact with the ground, thereby maximizing an anti-slip effect.

14. The method for manufacturing the auxiliary shoe heel according to claim 11, wherein
a plurality of to-be-filled grooves 34b, which is to be filled with the soft heel (40) when the soft heel (40) is coupled through an insert injection molding process, is formed in the periphery of the hard heel (34),
groove hook portions (34d) are formed at both sides of an opening (34c) of the to-be-filled groove 34b which is formed by cutting an outer surface of the hard heel (34) so as to face each other,
a to-be-filled recess (34e) having a circular sectional shape, a triangular sectional shape, or a rectangular sectional shape is formed to be recessed between the groove hook portions (34d), and
the soft heel (40) fills the to-be-filled grooves 34, so that a coupling force between the soft heel (40) and the hard heel (34) is increased.
